# EUROPEAN PATENT SPECIFICATION

(11) **EP 3 202 639 B1**
(45) Date of publication and mention of the grant of the patent: **18.09.2019**
(21) Application number: 17154035.4
(22) Date of filing: 31.01.2017
(51) Int. Cl.: B62D 1/20, F16D 3/38, F16D 1/08, F16C 3/03

(54) **STEERING SYSTEM**
LENKSYSTEM
SYSTÈME DE DIRECTION

(30) Priority: 01.02.2016 JP 2016017256
(43) Date of publication of application: 09.08.2017
(73) Proprietor: JTEKT CORPORATION, Osaka-shi, Osaka 542-8502 (JP)
(72) Inventor: KOBAYASHI, Masanori, Osaka-shi, Osaka 542-8502 (JP); TSUJI, Naoki, Osaka-shi, Osaka 542-8502 (JP); KOYAMA, Takeshi, Yao-shi, Osaka 581-0091 (JP)
(74) Representative: Winter, Brandl, Fürniss, Hübner, Röss, Kaiser, Polte - Partnerschaft mbB

(56) References cited:
- EP-A2- 2 735 752
- WO-A1-2007/092764
- WO-A1-2013/117982
- DE-A1-102005 001 082

## Description

### BACKGROUND OF THE INVENTION

### 1. Field of the Invention

The invention relates to a method for assembling a steering system.

### 2. Description of the Related Art

A steering system generally includes an intermediate shaft that couples a steering shaft on which a steering wheel is installed to a pinion shaft of a steering gear. A universal joint is interposed between the intermediate shaft and the steering shaft and between the intermediate shaft and the pinion shaft. See, for example, Japanese Patent Application Publication No. 2015-110988 (JP 2015-110988 A).

As disclosed in JP 2015-110988 A, the universal joint between the intermediate shaft and the pinion shaft is coupled to the pinion shaft via a bolt. When the steering system is assembled in a vehicle body, if the bolt is attached in a direction in which an attachment operation is not easy, an operation of assembling the universal joint in the steering system may be inefficient. Document WO 2013/117982 A1 discloses the preamble of claim 1.

### SUMMARY OF THE INVENTION

An object of the invention is to provide a steering system that can be more efficiently assembled in a vehicle body.

The invention is defined in claim 1.
In an aspect of the invention, a method is provided for assembling a steering system including an intermediate shaft to which a turning force of a steering member is transmitted through a first end of the intermediate shaft, a first universal joint coupled to the first end of the intermediate shaft, and a second universal joint coupled to a second end of the intermediate shaft. The first universal joint includes a first yoke coupled to the intermediate shaft and a second yoke paired with the first yoke, and the second universal joint includes a third yoke coupled to the intermediate shaft, a fourth yoke paired with the third yoke, and a shaft attachment portion coupled to the fourth yoke and via which a shaft is attached to the fourth yoke. A bolt insertion hole is formed in the shaft attachment portion to allow the shaft to be
clamped. When an angle between the intermediate shaft and a shaft coupled to the second yoke is set to θ1, an around-axis angle of the first yoke in a rotating direction around an axial direction is set to ω1, and an angle between the intermediate shaft and the shaft coupled to the fourth yoke is set to θ2, a junction angle between the fourth yoke and the shaft attachment portion in the rotating direction is adjusted to set an around-axis angle of the bolt insertion hole in the shaft attachment portion in the rotating direction to a preset angle ω2.

In this aspect, when the angle between the intermediate shaft and the shaft coupled to the second yoke is set to θ1, the around-axis angle of the first yoke in the rotating direction around the axial direction is set to ω1, and the angle between the intermediate shaft and the shaft coupled to the fourth yoke is set to θ2, the junction angle between the fourth yoke and the shaft attachment portion in the rotating direction is adjusted to set the around-axis angle of the bolt insertion hole in the shaft attachment portion in the rotating direction to the angle (preset angle) ω2, at which an operation of inserting the bolt through the bolt insertion hole is facilitated. Thus, the steering system can be more efficiently assembled into the vehicle body.

In the method for assembling a steering system in the above-described aspect, with the around-axis angle of the first yoke set to ω1, a pair of arm portions of the first yoke may be arranged in a vertical direction or a lateral direction when the steering member is in a steering neutral position.

In the method for assembling a steering system in the above-described aspect, with the around-axis angle of the first yoke set to ω1, the arm portions of the first yoke are arranged in the vertical direction or the lateral direction. Thus, a torsional rigidity of the intermediate shaft varies in the same manner regardless of whether a driver of a vehicle steers the steering member rightward or leftward with respect to the steering neutral position. Thus, the driver of the vehicle have the same steering feeling regardless of whether the driver steers the steering member rightward or leftward with respect to the steering neutral position. This allows the steering system to be more efficiently assembled into the vehicle body without undermining the driver's favorable steering feeling.

In the method for assembling a steering system in the above-described aspect, the fourth yoke and the shaft attachment portion may be serration-fitted together.

In the method for assembling a steering system in the above-described aspect, since the fourth yoke and the shaft attachment portion are serration-fitted together, the junction angle between the fourth yoke and the shaft attachment portion can be easily adjusted.

In the method for assembling a steering system in the above-described aspect, the fourth yoke and the shaft attachment portion may be joined together.

In the steering system in the above-described aspect, the fourth yoke and the shaft attachment portion are joined together and thus firmly fixed together.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic diagram of a steering system used in a method according to a first embodiment of the invention;
FIG. 2 is a side view depicting a periphery of an intermediate shaft;
FIG. 3 is an exploded perspective view of a periphery of a fourth yoke and a shaft attachment portion of a second universal joint;
FIG. 4 is a schematic sectional view taken along line IV-IV in FIG. 2;
FIG. 5 is a schematic diagram of a periphery of the second universal joint as viewed in the direction of arrow V in FIG. 2;
FIG. 6 is a graph illustrating a relation between an around-axis angle of a first yoke and a torsional rigidity of the intermediate shaft;
FIG. 7 is a side view depicting a periphery of an intermediate shaft of a steering system according to a second embodiment of the invention; and
FIG. 8 is a schematic sectional view taken along line VIII-VIII in FIG. 7.

### DETAILED DESCRIPTION OF EMBODIMENTS

Embodiments of the invention will be described below with reference to the attached drawings.

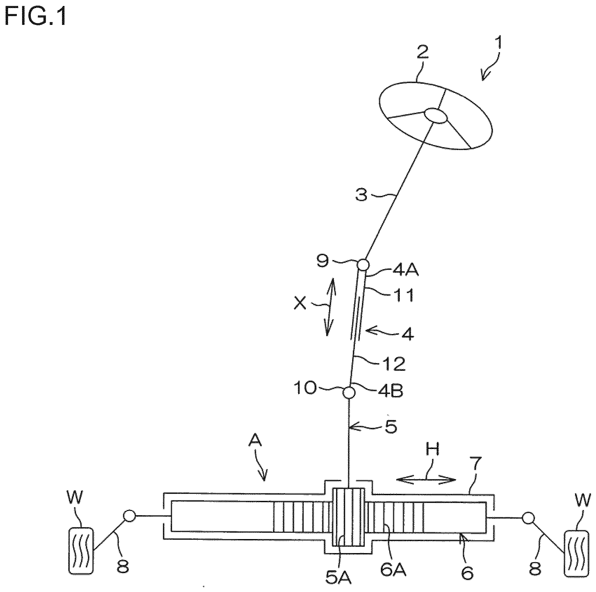

FIG. 1 is a schematic diagram of a steering system 1 used in a method according to a first embodiment of the invention. The steering system 1 includes an intermediate shaft 4 to which a turning force of a steering member 2 such as a steering wheel is transmitted through a first end 4A via a steering shaft 3 to which the steering member 2 is coupled at a first end of the steering shaft 3. The intermediate shaft 4 transmits the turning force to a steering operation mechanism A which steers steered wheels W.

The steering system 1 further includes a first universal joint 9 coupled to the first end 4A (the end closer to the steering member 2) and the steering shaft 3 and a second universal joint 10 coupled to a second end 4B (an end opposite to the steering member 2) of the intermediate shaft 4 and a pinion shaft 5 of the steering operation mechanism A.

The intermediate shaft 4 is extendable and retractable in an axial direction X of the intermediate shaft 4 and includes a first shaft 11 and a second shaft 12 fitted together by, for example, splining, so as to be relatively movable and integrally rotatable. The first universal joint 9 is coupled to the first shaft 11, and the second universal joint 10 is coupled to the second shaft 12.

On the pinion shaft 5, a pinion 5A is formed which meshes with a rack 6A formed on a rack shaft 6 forming the steering operation mechanism A along with the pinion shaft 5. The rack shaft 6 is shaped like a rod that is elongate in a lateral direction H and that extends horizontally rightward and leftward in the vehicle. The rack shaft 6 is inserted through a rack housing 7. The lateral direction H corresponds to a vehicle width direction. Tie rods 8 are coupled to respective ends of the rack shaft 6 in the lateral direction H. The tie rods 8 are coupled to the steered wheels W via respective knuckle arms (not depicted in the drawings).

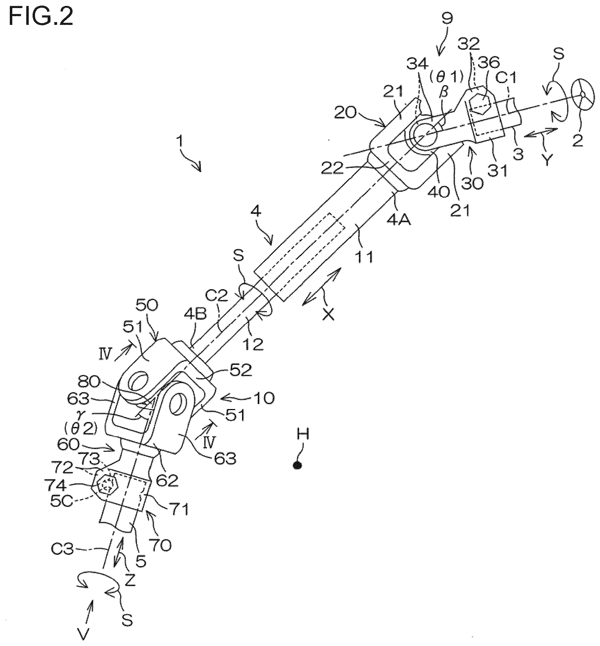

FIG. 2 is a side view depicting a periphery of the intermediate shaft 4. In FIG. 2, members of the steering system are illustrated with the lateral direction H set to coincide with a direction perpendicular to the sheet of the drawing.

A rotating direction S hereinafter refers to a rotating direction around a central axis C1 of the steering shaft 3, a rotating direction around a central axis C2 of the intermediate shaft 4, and a rotating direction around a central axis C3 of the pinion shaft 5. The rotating direction S is a direction around the axial direction of the steering shaft 3, the intermediate shaft 4, and the pinion shaft 5.

As seen in FIG. 2, the first universal joint 9 includes a first yoke 20 coupled to the intermediate shaft 4, a second yoke 30 paired with the first yoke 20, and a joint spider 40 that couples the first yoke 20 and the second yoke 30 together so as to make the first yoke 20 and the second yoke 30 relatively displaceable.

The first yoke 20 integrally includes a flange portion 22 fixed to the first end 4A of the intermediate shaft 4 by welding or the like and a pair of first arm portions 21 extending in the axial direction X from the first end 4A and facing each other across the central axis C2.

The second yoke 30 includes a tubular portion 31 through which the steering shaft 3 is inserted and a pair of clamping plates 32 extending from the tubular portion 31 and clamping the steering shaft 3 via the tubular portion 31. The second yoke 30 further includes a pair of second arm portions 34 extending from the tubular portion 31 in an axial direction thereof and facing each other across the central axis C1 at a position displaced from the position of the first arm portions 21 in the rotating direction S by 90° along the rotating direction S. The tubular portion 31, the clamping plates 32, and the second arm portions 34 are integrally formed.

A clamping bolt 36 is inserted through the clamping plates 32 to clamp the steering shaft 3. The clamping bolt 36 clamps the clamping plates 32 together to clamp the steering shaft 3 in the tubular portion 31.

The second universal joint 10 includes a third yoke 50 coupled to the intermediate shaft 4, a fourth yoke 60 paired with the third yoke 50, a shaft attachment portion 70 joined to the fourth yoke 60 and via which the pinion shaft 5 is attached to the fourth yoke 60, and a joint spider 80 that couples the third yoke 50 and the fourth yoke 60 together so as to make the third yoke 50 and the fourth yoke 60 relatively displaceable. The fourth yoke 60 and the shaft attachment portion 70 are serration-fitted together and joined together by welding.

The third yoke 50 integrally includes a flange portion 52 fixed to a second end 4B of the intermediate shaft 4 by welding or the like and a pair of third arm portions 51 extending in the axial direction X from the flange portion 52 and facing each other across the central axis C2.

The fourth yoke 60 includes a flange portion 62 joined to the shaft attachment portion 70 and a pair of fourth arm portions 63 extending in an axial direction Z in which the central axis C3 extends and facing each other at a position displaced from the position of the third arm portions 51 by 90° in the rotating direction S.

An angle between the intermediate shaft 4 and the steering shaft 3 as viewed in the lateral direction H is designated as an angle β. The angle β is 0° when the steering shaft 3 and the intermediate shaft 4 are arranged coaxially and adjacent to each other in the axial direction X.

An angle between the intermediate shaft 4 and the pinion shaft 5 as viewed in the lateral direction H is designated as an angle γ. The angle γ is 0° when the intermediate shaft 4 and the pinion shaft 5 are arranged coaxially and adjacent to each other in the axial direction X.

When the steering system 1 as described above is assembled into a vehicle body, the following operation is performed. The angle β is set to an angle θ1 preset in accordance with specifications or the like, the angle γ is set to an angle θ2 preset in accordance with the specifications or the like, and the first universal joint 9 and the second universal joint 10 are arranged at predetermined positions in the rotating direction S. Then, the pinion shaft 5 is inserted through the shaft attachment portion 70 of the second universal joint 10, and the pinion shaft 5 is attached to the shaft attachment portion 70 with the clamping bolt 74.

The following description relates to a coupling structure for the second universal joint 10 and the pinion shaft 5, and the positions of the first universal joint 9 and the second universal joint 10 in the rotating direction S.

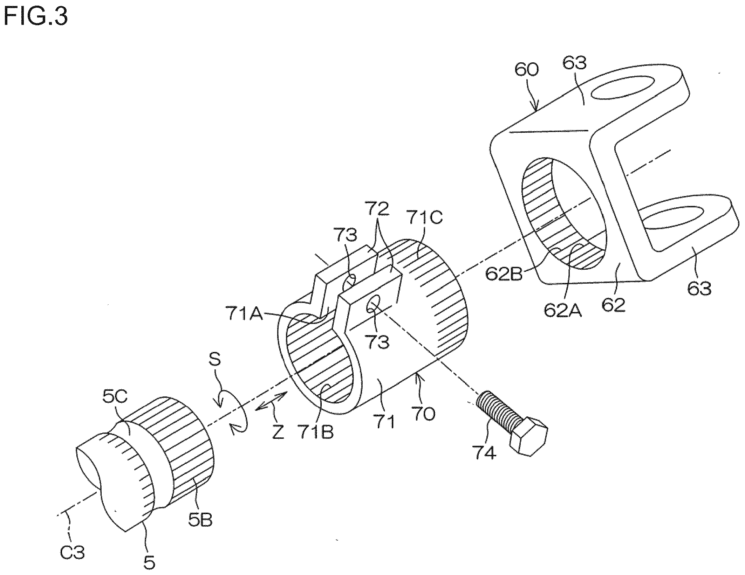

FIG. 3 is an exploded perspective view of a periphery of the fourth yoke 60 and the shaft attachment portion 70 of the second universal joint 10.

As seen in FIG. 3, the shaft attachment portion 70 integrally includes a tubular portion 71 externally fitted over a shaft such as the pinion shaft 5 and a pair of clamping plates 72 extending from the tubular portion 71 and configured to clamp a shaft such as the pinion shaft 5 via the tubular portion 71; the tubular portion 71 and the clamping plates 72 are formed into a single member.

In the tubular portion 71, a slit 71A is formed which extends along the axial direction Z of the tubular portion 71 between the clamping plates 72. On an inner periphery of the tubular portion 71, an internal serration 71B is formed which is serration-fitted to an external serration 5B formed at an end of the pinion shaft 5.

A bolt insertion hole 73 is formed in each of the clamping plates 72 to allow the shaft such as the pinion shaft 5 to be clamped. A clamping bolt 74 is inserted through the bolt insertion holes 73. The clamping bolt 74 is fitted in a peripheral groove 5C of the pinion shaft 5 (see also FIG. 2). The clamping bolt 74 allows retaining of the pinion shaft 5 in the tubular portion 71 to be achieved. The clamping bolt 74 clamps the clamping plates 72 together to clamp the pinion shaft 5 in the tubular portion 71.

The tubular portion 71 is serration-fitted to the flange portion 62. An external serration 71C is formed in a portion of an outer peripheral surface of the tubular portion 71 that is closer to the flange portion 62 than the clamping plates 72. In the flange portion 62, an insertion hole 62A is formed through which the tubular portion 71 is inserted. On an inner peripheral surface of the insertion hole 62A, an internal serration 62B is formed which is serration-fitted to the external serration 71C.

The fourth yoke 60 and the shaft attachment portion 70 are not limited to junction based on welding but may be joined together by clinching or friction welding. The clinching is performed on the fourth yoke 60 and the shaft attachment portion 70 serration fitted together, by plastically deforming the flange portion 62 of the fourth yoke 60 or the tubular portion 71 of the shaft attachment portion 70 to couple the flange portion 62 and the tubular portion 71 together.

The length of the serration fitting between the tubular portion 71 and the flange portion 62 is adjusted to allow adjustment of the sum (yoke length) of the lengths of the fourth yoke 60 and the shaft attachment portion 70 in the axial direction. The fourth yoke 60 and the shaft attachment portion 70 may be joined together by clinching or frictional welding with the yoke length adjusted.

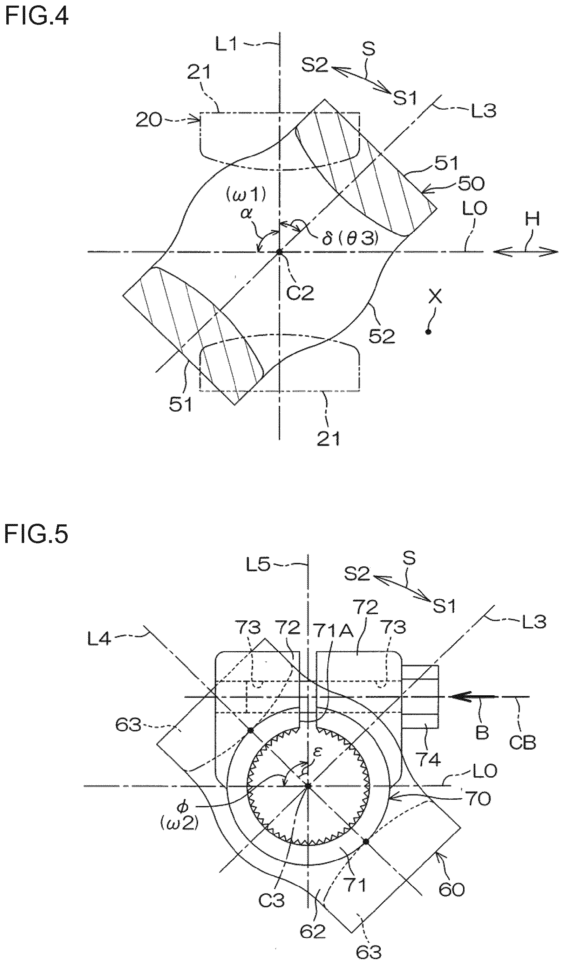

FIG. 4 is a schematic sectional view taken along line IV-IV in FIG. 2. In FIG. 4, illustration of the joint spider 80 is omitted for convenience of description. Furthermore, in FIG. 4, the first arm portions 21 of the first yoke 20 are depicted by a long dashed double-short dashed line for convenience of description. A clockwise direction along the rotating direction S as viewed from a side opposite to the steering member 2 is designated as an S1 direction. A counterclockwise direction along the rotating direction S as viewed from the side opposite to the steering member 2 is designated as an S2 direction. A line L0 hereinafter indicates a virtual line intersecting the central axis C2 and extending horizontally (in the lateral direction H).

A line L1 indicates a virtual line intersecting the central axis C2 and extending in a direction in which the first arm portions 21 face each other. The line L1 is displaced from the line L0 by an around-axis angle α in the S1 direction. The around-axis angle α is represented by an angle smaller than 360° (0° ≤ α < 360°).

The around-axis angle is set to the angle ω1 preset in accordance with the specifications or the like. In the present embodiment, the angle ω1 is set such that, with the steering member 2 located in the steering neutral position, the around-axis angle α is 90° or 270°. The steering neutral position refers to the position of the steering member 2 in the rotating direction S during straight traveling of the vehicle. With the steering member 2 in the steering neutral position, the first arm portions 21 are arranged in the vertical direction (the direction orthogonal to the lateral direction H). In this state, the line L1 and the line L0 are orthogonal to each other.

A line L3 indicates a virtual line intersecting the central axis C2 and extending in a direction in which the third arm portions 51 face each other. The line L3 is displaced from the line L1 by a phase angle δ in the S1 direction (0° ≤ δ < 360°).

When the angle β between the intermediate shaft 4 and the steering shaft 3 is set to the angle θ1 preset in accordance with the specifications or the like and the angle γ between the intermediate shaft 4 and the pinion shaft 5 is set to the angle θ2 preset in accordance with the specifications or the like, the phase angle δ is set to an angle θ3 at which a turning force from the steering shaft 3 can be efficiently transmitted to the pinion shaft 5.

FIG. 5 is a schematic diagram of a periphery of the second universal joint 10 as viewed in the direction of arrow V in FIG. 2. In FIG. 5, illustration of the pinion shaft 5 and the third yoke 50 is omitted for convenience of description. Furthermore, in FIG. 5, the line L3 extending in the direction in which the third arm portions 51 face each other is depicted for convenience of description.

As seen in FIG. 5, a line L4 indicates a virtual line intersecting the central axis C3 and extending in a direction in which the fourth arm portions 63 face each other. The fourth arm portions 63 face each other at a position displaced from the position of the third arm portions 51 by 90°, and thus, the line L4 is orthogonal to the line L3.

A line L5 indicates a virtual line intersecting the central axis C3 and a central axis CB of the bolt insertion hole 73. A bolt insertion direction B in which the clamping bolt 74 is inserted into the bolt insertion hole 73 extends along the central axis CB. The angle between the line L0 and the line L5 is designated as an around-axis angle φ of the bolt insertion hole 73 in the rotating direction S. The around-axis angle φ is represented by an angle smaller than 360° (0° ≤ φ < 360°).

The around-axis angle φ of the bolt insertion hole 73 in the rotating direction S is set to an angle ω2 preset in accordance with the specifications or the like. The angle ω2 refers to an angle to which the bolt insertion direction B is preset so as to facilitate an operation of inserting the clamping bolt 74 into the second universal joint 10.

When the angle β between the intermediate shaft 4 and the steering shaft 3 is set to the preset angle θ1 and the angle γ between the intermediate shaft 4 and the pinion shaft 5 is set to the preset angle θ2, that is, when the phase angle δ is set to the angle θ3 and the around-axis angle α of the first arm portions 21 of the first yoke 20 is set to the preset angle ω1, a junction angle ε between the fourth yoke 60 and the shaft attachment portion 70 in the rotating direction S is adjusted (0° ≤ ε < 360°) so as to set the around-axis angle φ of the bolt insertion hole 73 in the shaft attachment portion 70 in the rotating direction S to the angle ω2. The junction angle ε refers to an angle between the line L4 and the line L5.

In the first embodiment, when the angle β is set to θ1, the around-axis angle α is set to ω1, and the angle γ is set to θ2, the junction angle ε between the fourth yoke 60 and the shaft attachment portion 70 in the rotating direction S can be adjusted so as to set the around-axis angle φ of the bolt insertion hole 73 in the shaft attachment portion 70 in the rotating direction S to the angle ω2, at which the operation of inserting the clamping bolt 74 into the bolt insertion hole 73 is facilitated. Thus, the steering system 1 can be more efficiently assembled into the vehicle body.

With the junction angle ε adjusted, the shaft attachment portion 70 with the bolt insertion hole 73 formed therein is serration-fitted to the fourth arm portions 63 to enable the around-axis angle φ of the bolt insertion hole 73 in the rotating direction S to be set to the angle ω2. Consequently, the junction angle ε between the fourth yoke 60 and the shaft attachment portion 70 can be easily adjusted.

The fourth yoke 60 and the shaft attachment portion 70 are joined together by weld clinching, friction welding, or the like. Thus, the fourth yoke 60 and the shaft attachment portion 70 can be firmly fixed together.

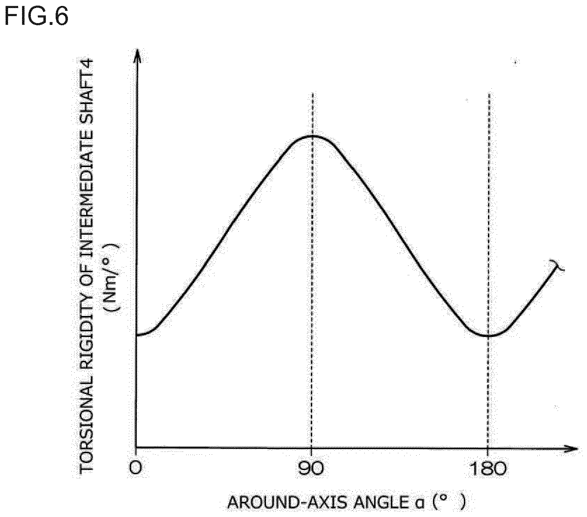

Since the shaft attachment portion 70 and the fourth yoke 60 are firmly fixed together by serration fitting, welding, or the like, even when a separately formed shaft attachment portion 70 and a separately formed fourth yoke 60 are used for the second universal joint 10, the rigidity and strength of the intermediate shaft 4 can be maintained. FIG. 6 is a graph illustrating a relation between the around-axis angle α of the first yoke 20 and torsional rigidity of the intermediate shaft 4. In the graph in FIG. 6, an axis of abscissas represents the around-axis angle (°) α, and an axis of ordinate represents the torsional rigidity (Nm/°) of the intermediate shaft 4. In FIG. 6, the torsional rigidity of the intermediate shaft 4 varies with a period of 180°, and thus, illustration of a part of the graph in which the around-axis angle α is larger than 180° is omitted. For 0° < α ≤ 180°, the torsional rigidity of the intermediate shaft 4 is highest when the around-axis angle α is 90°, and is lowest when the around-axis angle α is 180°.

With the around-axis angle α set to the angle ω1, the first arm portions 21 of the first yoke 20 are arranged in the vertical direction when the steering member 2 is in the steering neutral position. In other words, the around-axis angle α is 90° when the steering member 2 is in the steering neutral position. In this case, the torsional rigidity of the intermediate shaft 4 is highest when the steering member 2 is in the steering neutral position, and decreases when the steering member 2 is steered with respect to the steering neutral position such that the manner of the decrease is the same regardless of whether the steering member 2 is steered rightward or leftward. Thus, the driver of the vehicle has the same stable steering feeling regardless of whether the steering member 2 is steered rightward or leftward with respect to the steering neutral position. This allows the steering system 1 to be more efficiently assembled into the vehicle body without undermining the driver's favorable steering feeling.

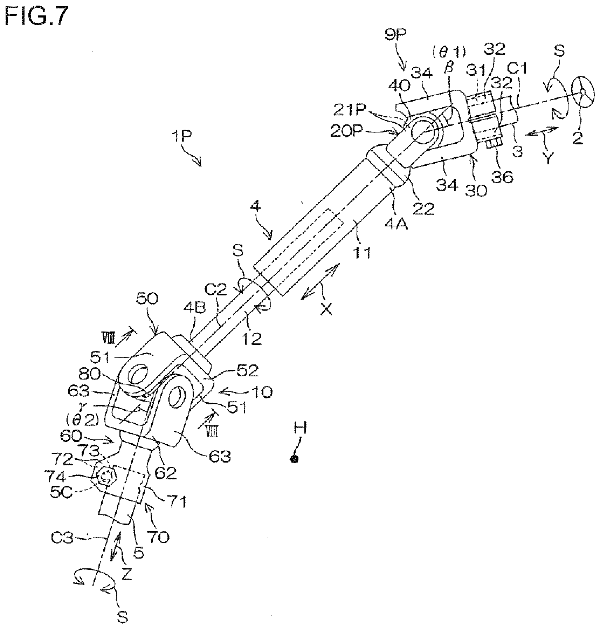

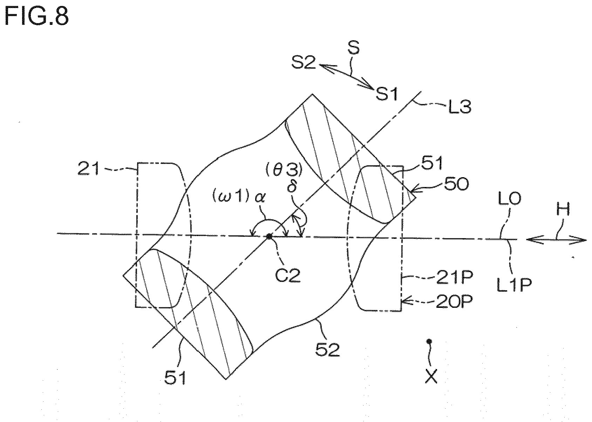

A steering system 1P according to a second embodiment of the invention will be described below. FIG. 7 is a side view depicting a periphery of the intermediate shaft 4 in the steering system 1P. In FIG. 7, members of the steering system are illustrated with the lateral direction H set to coincide with a direction perpendicular to the sheet of the drawing. FIG. 8 is a schematic sectional view taken along line VIII-VIII in FIG. 7. In FIG. 7 and FIG. 8, members of the second embodiment similar to the corresponding members described above are denoted by the same reference numerals and will thus not be described.

As seen in FIG. 7, the steering system 1P according to the second embodiment is different from the steering system 1 according to the first embodiment (see FIG. 2) in that first arm portions 21P of a first yoke 20P of a first universal joint 9P are arranged in the lateral direction H when the steering member 2 is in the steering neutral position.

As seen in FIG. 8, a line LIP indicates a virtual line intersecting the central axis C2 and extending in a direction in which first arm portions 21P face each other. The line L1P is located at a position displaced from the line L0 by the around-axis angle α in the S1 direction. The around-axis angle α is represented by an angle smaller than 360° (0° ≤ α < 360°).

The around-axis angle α is set to the preset angle ω1. In the second embodiment, the angle ω1 is set such that the around-axis angle α is 0° or 180° when the steering member 2 (see FIG. 7) is in the steering neutral position. In this state, the line LIP overlaps the line L0.

In the second embodiment, the virtual line L3 extending in the direction in which the third arm portions 51 of the third yoke 50 in the rotating direction S face each other is located at a position displaced from the line LIP by the phase angle δ in the S2 direction (0° ≤ δ < 360°).

In the second embodiment, the angle ω1 is set such that the around-axis angle α is 0° or 180° when the steering member 2 is in the steering neutral position. However, the second embodiment produces the same effects as those of the first embodiment. That is, when the angle β is set to θ1, the around-axis angle α is set to ω1, and the angle γ is set to θ2, the junction angle ε between the fourth yoke 60 and the shaft attachment portion 70 can be adjusted so as to set the around-axis angle φ of the bolt insertion hole 73 in the shaft attachment portion 70 in the rotating direction S to the angle ω2, at which the operation of inserting the clamping bolt 74 into the bolt insertion hole 73 is facilitated. Thus, the steering system 1 can be more efficiently assembled into the vehicle body.

In the second embodiment, with the around-axis angle α set to the angle ω1, the first arm portions 21P of the first yoke 20P are arranged in the lateral direction when the steering member 2 is in the steering neutral position. In other words, the around-axis angle α is 0° or 180° when the steering member 2 is in the steering neutral position. In this case, the torsional rigidity of the intermediate shaft 4 is lowest when the steering member 2 is in the steering neutral position (see FIG. 6), and increases when the steering member 2 is steered with respect to the steering neutral position such that the manner of the increases is the same regardless of whether the steering member 2 is steered rightward or leftward. Thus, the driver of the vehicle has the same smooth steering feeling regardless of whether the steering member 2 is steered rightward or leftward with respect to the steering neutral position. This allows the steering system 1 to be more efficiently assembled into the vehicle body without undermining the driver's favorable steering feeling.

The invention is not limited to the above-described embodiments but various changes may be made to the embodiments according to the appended claims.

For example, the external serration 71C may be omitted from the tubular portion 71, and the internal serration 62B may be omitted from the flange portion 62. In this case, the tubular portion 71 and the flange portion 62 are joined together while being supported with a jig or the like with the junction angle ε adjusted to set the around-axis angle φ of the bolt insertion hole 73 in the rotating direction S to the angle ω2. Examples of a method for the junction include welding and clinching.

Unlike in the present embodiment, the fourth yoke 60 may be a casting with the junction angle ε pre-adjusted to set the around-axis angle φ of the bolt insertion hole 73 in the rotating direction S to the angle ω2.

The angle ω1 need not necessarily be set so as to arrange the first arm portions 21, 21P in the vertical direction or the lateral direction at the steering neutral position. For example, the angle ω1 may be set so as to minimize adverse effects of vibration input through the steered wheels W or the like. This enables a reduction in the degree of elimination of possible backlash between the members of the steering system 1 and also enables a reduction in rubber (not depicted in the drawings) or the like provided in the steering system 1 to prevent possible vibration.

## Claims

1. A method for assembling a steering system (1) comprising:
an intermediate shaft (4) to which a turning force of a steering member (2) is transmitted through a first end (4A) of the intermediate shaft via a steering shaft (3) to which the steering member (2) is coupled at a first end of the steering shaft;
a first universal joint (9) coupled to the first end (4A) of the intermediate shaft; and
a second universal joint (10) coupled to a second end (4B) of the intermediate shaft (4), wherein
the first universal joint (9) includes a first yoke (20) coupled to the intermediate shaft (4) and a second yoke (30) paired with the first yoke (20), and the second universal joint (10) includes a third yoke (50) coupled to the intermediate shaft, a fourth yoke (60) paired with the third yoke, and a shaft attachment portion (70) coupled to the fourth yoke and via which a shaft (5) is attached to the fourth yoke (60), and
a bolt insertion hole (73) is formed in the shaft attachment portion (70) to allow the shaft (5) to be clamped, **characterized in that**
the second yoke (30) includes: a tubular portion (31) through which the steering shaft is inserted, a pair of clamping plates (32) extending from the tubular portion and clamping the steering shaft via the tubular portion, and a pair of arm portions (34) extending from the tubular portion in an axial direction thereof and facing each other across a central axis (C1) of the steering shaft at a position displaced from the position of arm portions (21) of the first yoke by 90° along the central axis; and the tubular portion, the clamping plates, and the second arm portions are integrally formed,
wherein the method comprises:
when an angle (β) between the intermediate shaft (4) and a shaft (3) coupled to the second yoke (30) is set to θ1, an around-axis angle (α) of the first yoke (20) in a rotating direction (S) around an axial direction (Z) is set to ω1 so that torsional rigidity of the intermediate shaft is highest or lowest when the steering member is located in the steering neutral position, and an angle (γ) between the intermediate shaft (4) and the shaft (5) coupled to the fourth yoke (60) is set to θ2, adjusting a junction angle (ε) between the fourth yoke (60) and the shaft attachment portion (70) in the rotating direction (S) to set an around-axis angle (φ) of the bolt insertion hole (73) in the shaft attachment portion (70) in the rotating direction (S) to a preset angle ω2.

2. The method for assembling a steering system (1), according to claim 1, wherein
with the around-axis angle (α) of the first yoke (20) set to ω1, a pair of arm portions (21) of the first yoke (20) is arranged in a vertical direction or a lateral direction (H) when the steering member (2) is in a steering neutral position.

3. The method for assembling a steering system (1), according to claim 1 or 2, wherein
the fourth yoke (60) and the shaft attachment portion (70) are serration-fitted together.

4. The method for assembling a steering system (1), according to any one of claims 1 to 3, wherein
the fourth yoke (60) and the shaft attachment portion (70) are joined together.

## Patentansprüche

1. Verfahren zum Zusammenbau eines Lenksystems (1) mit:
einer Zwischenwelle (4), auf die eine Drehkraft eines Lenkelements (2) durch ein erstes Ende (4A) der Zwischenwelle über eine Lenkwelle (3) übertragen wird, mit der das Lenkelement (2) an einem ersten Ende der Lenkwelle gekoppelt ist;
einem ersten Kreuzgelenk (9), das mit dem ersten Ende (4A) der Zwischenwelle gekoppelt ist; und
einem zweiten Kreuzgelenk (10), das mit einem zweiten Ende (4B) der Zwischenwelle (4) gekoppelt ist, wobei
das erste Kreuzgelenk (9) ein erstes Joch (20), das mit der Zwischenwelle (4) gekoppelt ist, und ein zweites Joch (30) enthält, das mit dem ersten Joch (20) gepaart ist, und das zweite Kreuzgelenk (10) ein drittes Joch (50), das mit der Zwischenwelle gekoppelt ist, ein viertes Joch (60), das mit dem dritten Joch gepaart ist, und einen Wellenbefestigungsabschnitt (70) enthält, der mit dem vierten Joch gekoppelt ist und über den eine Welle (5) mit dem vierten Joch (60) befestigt ist, und
ein Bolzeneinführungsloch (73) in dem Wellenbefestigungsabschnitt (70) ausgebildet ist, um das Klemmen der Welle (5) zu ermöglichen, **dadurch gekennzeichnet, dass**
das zweite Joch (30) einen rohrförmigen Abschnitt (31), durch den die Lenkwelle eingeführt ist, ein Paar Klemmplatten (32), die sich von dem rohrförmigen Abschnitt erstrecken und die Lenkwelle über den rohrförmigen Abschnitt klemmen, und ein Paar Armabschnitte (34) enthält, die sich von dem rohrförmigen Abschnitt in seiner axialen Richtung erstrecken und sich über eine Mittelachse (C1) der Lenkwelle in einer Position gegenüberliegen, die von der Position der Armabschnitte (21) des ersten Jochs entlang der Mittelachse um 90° verschoben ist; und der rohrförmige Abschnitt, die Klemmplatten und die zweiten Armabschnitte integral ausgebildet sind,
wobei das Verfahren umfasst:
wenn ein Winkel (β) zwischen der Zwischenwelle (4) und einer mit dem zweiten Joch (30) gekoppelten Welle (3) auf θ1 eingestellt ist, ein Rundachsenwinkel (α) des ersten Jochs (20) in einer Drehrichtung (S) um eine Axialrichtung (Z) auf ω1 eingestellt ist, so dass die Torsionssteifigkeit der Zwischenwelle am höchsten oder am niedrigsten ist, wenn sich das Lenkelement in der neutralen Lenkungsposition befindet, und ein Winkel (γ) zwischen der Zwischenwelle (4) und der mit dem vierten Joch (60) gekoppelten Welle (5) auf θ2 eingestellt ist, wobei ein Verbindungswinkel (ε) zwischen dem vierten Joch (60) und dem Wellenbefestigungsabschnitt (70) in Drehrichtung (S) eingestellt wird, um einen Rundachsenwinkel (θ) des Bolzeneinführungslochs (73) im Wellenbefestigungsabschnitt (70) in Drehrichtung (S) auf einen vorgegebenen Winkel ω2 einzustellen.

2. Verfahren zum Zusammenbau eines Lenksystems (1) nach Anspruch 1, wobei
mit dem auf ω1 eingestellten Rundachsenwinkel (α) des ersten Jochs (20) ein Paar Armabschnitte (21) des ersten Jochs (20) in vertikaler Richtung oder in Querrichtung (H) angeordnet ist, wenn sich das Lenkelement (2) in einer neutralen Lenkungsposition befindet.

3. Verfahren zum Zusammenbau eines Lenksystems (1) nach Anspruch 1 oder 2, wobei
das vierte Joch (60) und der Wellenbefestigungsabschnitt (70) miteinander verzahnt sind.

4. Verfahren zum Zusammenbau eines Lenksystems (1) nach einem der Ansprüche 1 bis 3, wobei
das vierte Joch (60) und der Wellenbefestigungsabschnitt (70) miteinander verbunden sind.

## Revendications

1. Procédé d'assemblage d'un système de direction (1) comprenant :
un arbre intermédiaire (4) auquel une force de rotation d'un élément de direction (2) est transmise par une première extrémité (4A) de l'arbre intermédiaire par le biais d'un arbre de direction (3) auquel l'élément de direction (2) est accouplé à une première extrémité de l'arbre de direction ;
un premier joint de cardan (9) accouplé à la première extrémité (4A) de l'arbre intermédiaire ; et
un deuxième joint de cardan (10) accouplé à une deuxième extrémité (4B) de l'arbre intermédiaire (4), dans lequel
le premier joint de cardan (9) inclut une première fourche (20) accouplée à l'arbre intermédiaire (4) et une deuxième fourche (30) appariée à la première fourche (20), et le deuxième joint de cardan (10) inclut une troisième fourche (50) accouplée à l'arbre intermédiaire, une quatrième fourche (60) appariée à la troisième fourche, et une partie de fixation d'arbre (70) accouplée à la quatrième fourche et par le biais de laquelle un arbre (5) est fixé à la quatrième fourche (60), et
un trou d'insertion de boulon (73) est formé dans la partie de fixation d'arbre (70) pour permettre à l'arbre (5) d'être serré, **caractérisé en ce que**
la deuxième fourche (30) inclut : une partie tubulaire (31) par laquelle l'arbre de direction est inséré, une paire de plaques de serrage (32) s'étendant à partir de la partie tubulaire et serrant l'arbre de direction par le biais de la partie tubulaire, et une paire de parties bras (34) s'étendant à partir de la partie tubulaire dans une direction axiale de celle-ci et se faisant mutuellement face en travers d'un axe central (C1) de l'arbre de direction dans une position déplacée à partir de la position des parties bras (21) de la première fourche de 90° le long de l'axe central ; et la partie tubulaire, les plaques de serrage, et les deuxièmes parties bras sont formées d'une seule pièce,
dans lequel le procédé comprend :
lorsqu'un angle (β) entre l'arbre intermédiaire (4) et un arbre (3) accouplé à la deuxième fourche (30) est réglé sur θ1, un angle autour d'axe (α) de la première fourche (20) dans une direction de rotation (S) autour d'une direction axiale (Z) est réglé sur ω1 de sorte que la rigidité à la torsion de l'arbre intermédiaire est la plus élevée ou la plus basse lorsque l'élément de direction est situé dans la position neutre de direction, et un angle (γ) entre l'arbre intermédiaire (4) et l'arbre (5) accouplé à la quatrième fourche (60) est réglé sur θ2, l'ajustement d'un angle de jonction (ε) entre la quatrième fourche (60) et la partie de fixation d'arbre (70) dans la direction de rotation (S) pour régler un angle autour d'axe (Φ) du trou d'insertion de boulon (73) dans la partie de fixation d'arbre (70) dans la direction de rotation (S) sur un angle préréglé ω2.

2. Procédé d'assemblage d'un système de direction (1), selon la revendication 1, dans lequel
avec l'angle autour d'axe (α) de la première fourche (20) réglé sur ω1, une paire de parties bras (21) de la première fourche (20) est agencée dans une direction verticale ou une direction latérale (H) lorsque l'élément de direction (2) est dans une position neutre de direction.

3. Procédé d'assemblage d'un système de direction (1), selon la revendication 1 ou 2, dans lequel
la quatrième fourche (60) et la partie de fixation d'arbre (70) sont montées ensemble avec dentelure.

4. Procédé d'assemblage d'un système de direction (1), selon l'une quelconque des revendications 1 à 3, dans lequel
la quatrième fourche (60) et la partie de fixation d'arbre (70) sont jointes ensemble.
